# EUROPÄISCHE PATENTSCHRIFT

(11) **EP 2 564 488 B1**
(45) Veröffentlichungstag und Bekanntmachung des Hinweises auf die Patenterteilung: **04.09.2013**
(21) Anmeldenummer: 11725006.8
(22) Anmeldetag: 21.05.2011
(51) Int. Cl.: H02J 9/06, H05B 33/08, B61L 29/24, B61L 5/18

(54) **ENERGIEVERSORGUNGSEINHEIT FÜR SIGNAL-LEUCHTMITTEL MIT ENERGIEQUELLEN MIT GETRENNTEN MASSEN**
POWER SUPPLY UNIT FOR SIGNAL LUMINAIRES HAVING ENERGY SOURCES HAVING SEPARATE GROUNDS
UNITÉ D'ALIMENTATION EN ÉNERGIE POUR MOYENS LUMINEUX DE SIGNAL AVEC SOURCES D`ENERGIE AVEC DES MASSES SEPAREES

(30) Priorität: 16.06.2010 EP 10166155
(43) Veröffentlichungstag der Anmeldung: 06.03.2013
(73) Patentinhaber: Siemens Schweiz AG, 8047 Zürich (CH)
(72) Erfinder: SCHMID, Rolf, CH-8712 Stäfa (CH); DIETHELM, Bernhard, CH-5232 Galgenen (CH)
(74) Vertreter: Kley, Hansjörg
(86) Internationale Anmeldenummer: PCT/EP2011/058312
(87) Internationale Veröffentlichungsnummer: WO 2011/157512

(56) Entgegenhaltungen:
- WO-A2-91/15048
- US-A- 3 614 461
- US-A- 3 684 891
- US-A- 4 030 013
- US-A- 4 564 767
- US-A1- 2004 150 371

## Beschreibung

Die vorliegende Erfindung bezieht sich auf eine Energieversorgungseinheit für Signalleuchtmittel gemäss dem Oberbegriff des Patentanspruch 1.

In der Eisenbahnsignaltechnik ist es von besonderer Wichtigkeit, dass die Signalleuchtmittel stets einen definierten Anzeigezustand aufweisen. Dies ist insbesondere bei Signalen von Bedeutung, bei denen der Dunkelzustand die Bedeutung KEINE GEFAHR aufweist. Dies trifft beispielsweise zu bei unbewachten Bahnübergängen. Nur wenn ein Zug sich dem Bahnübergang nähert, wird die Warnleuchte aktiviert, allenfalls mit akustischer Unterstützung.

Heute sind folgende Lösungen für die Ansteuerung von Signalleuchtmitteln bekannt:

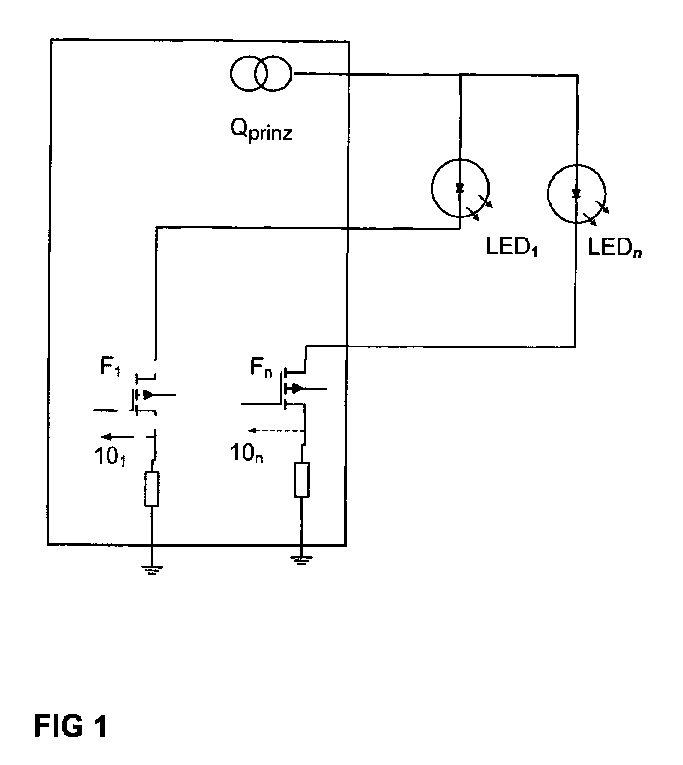

i) Figur 1 zeigt ein Signal, dass auf zwei LED-Modulen LED₁, LEDₙ beruht, die je einen eigenen Leitungspfad mit individueller Stromüberwachung 10₁, 10₂ aufweisen. Ein Ausfall der Hauptquelle Q_{prinz} kann durch die Stromüberwachung nicht erkannt werden, da beide das gleiche Resultat liefern.

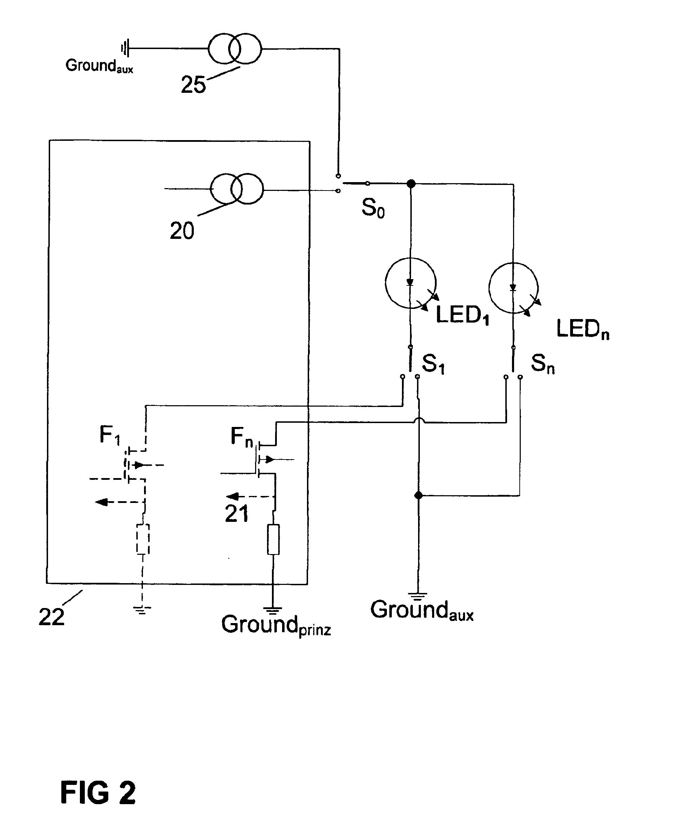

ii) Figur 2 zeigt ein Signal, das ebenfalls auf zwei LED-Modulen LED₁, LEDₙ beruht. Zusätzlich ist jedoch eine zweite, sogenannt redundante Energieversorgung 25 vorgesehen, die mit einem (Um-) Schalter S₀ im Bedarfsfall anstelle der Hauptquelle 20 zugeschaltet werden kann. Zu beachten ist, dass die Masse Groundₐᵤₓ der Hilfsquelle elektrisch von der Masse Ground_{prinz} der Hauptquelle verschieden ist. Diese Verschiedenheit der Massen hat folgenden technischen Grund:
Damit werden Ausgleichsströme und parasitäre Störungseffekte verhindert.
Da die Massen Groundₐᵤₓ und Ground_{prinz} elektrisch verschieden sind, erfolgt die Umschaltung nicht nur mit dem Schalter S₀, sondern zusätzlich mit einer Umschaltung der Masse, hier mit den Schaltern S₁, Sₙ. Mit der Indizierung 1 ... n ist angedeutet, dass mehr als zwei Leuchtmittel auf diese Weise redundant versorgt werden können.

Auch die Lösung ii) deckt nicht alle Fehlerfälle ab:
Ein Ausfall der Treiberkarte 22 führt dazu, dass die optische Warnung durch die Signalleuchtmittel LED₁ und LEDₙ unterbleibt. An dieser Stelle wird nochmals darauf hingewiesen, dass in der Anordnung und Anwendung das Aussenden von Licht eine Gefahr signalisiert. Bei den Signalen für einen Lokomotivführer gilt üblicherweise eine andere sichere Regel: Inaktive bzw. «dunkle» Signale haben stets die Bedeutung von «HALT», «GEFAHR».

Die Schrift US 4,564,767 [4] offenbart eine unterbrechungsfreie Stromversorgungseinheit mit einem zwei Primärwicklungen aufweisenden Transformator. Die eine Primärwicklung wird von einer AC-Hauptquelle im normalen Betriebsfall gespeist. Die andere Primärwicklung wird über einen Wechselrichter mit Energie aus einer DC-Quelle gespeist. Eine Logik schaltet die DC-Quelle quasi-instantan bei Unterschreiten eines Levels der AC-Quelle zu.

Aus der Schrift US 3,684, 891 [3] ist eine ausfallsichere Stromversorgungseinheit für eine Notbeleuchtung mittels Fluoreszenzlampen zu entnehmen.

Die in den vorgenannten Schriften enthaltenen Lösungen sind im Eisenbahnbereich nicht anwendbar. Z.B. gemäss der Lehre von US 3,684, 891 [6] ist es nicht möglich, dass ein Leuchtmittel unabhängig von der Energieversorgungslage aktiviert werden kann.

Der vorliegenden Erfindung liegt daher die Aufgabe zugrunde, eine Energieversorgungseinheit für Signalleuchtmittel anzugeben, die auch in Fehlerfällen die sichere Versorgung von Signalleuchten für die Anzeige einer Gefahr sicherstellt.

Diese Aufgabe wird durch die im unabhängigen Patentanspruch angegebenen Massnahmen gelöst. Vorteilhafte Ausgestaltungen der Erfindung sind in weiteren Ansprüchen angegeben.

Durch das Vorsehen einer kapazitiven Kopplung über Kondensatoren braucht es im Signalleuchtmittelstromkreis keine mechanischen Kontakte mehr. Dies erhöht die Zuverlässigkeit und die Verfügbarkeit in einem Fehlerfall. Die kapazitive Ankopplung kann auf einfache Weise in einer bestehenden Energieversorgungseinheit eingebaut worden.

So können sich die folgenden Vorteile zusätzlich ergeben:

i) Durch das Vorsehen einer AC-Quelle als Hilfsquelle kann die Stromauswertung unabhängig vom Signalleuchtmittelkreis im Primärkreis vorgenommen werden. Dadurch ist kein Eingriff im Signalleuchtmittelkreis erforderlich, was die Zuverlässigkeit der erfindungsgemässen Energieversorgungseinheit zusätzlich erhöht.

ii) Da im Betrieb in der Rückfallebene alle Signalleuchtmittel per Definition mit Energie versorgt werden, führt ein Ausfall einzelner aber nicht aller Signalleuchtmittel noch nicht dazu, dass fälschlicherweise keine Gefahr signalisiert wird.

Die Erfindung wird nachfolgend anhand der Zeichnung beispielsweise näher erläutert. Dabei zeigen:

Figur 1 Bekannte Lösung für die Ansteuerung von Leuchtmitteln;

Figur 2 Bekannte Lösung für die Ansteuerung von Leuchtmitteln mit einer Haupt- und Hilfsquelle;

Figur 3 Blockschaltbild gemäss einem Ausführungsbeispiel der vorliegenden Erfindung in der Darstellung für den normalen Betriebsfall;

Figur 4 Blockschaltbild gemäss einem Ausführungsbeispiel der vorliegenden Erfindung in der Darstellung für den Betrieb in der Rückfallebene.

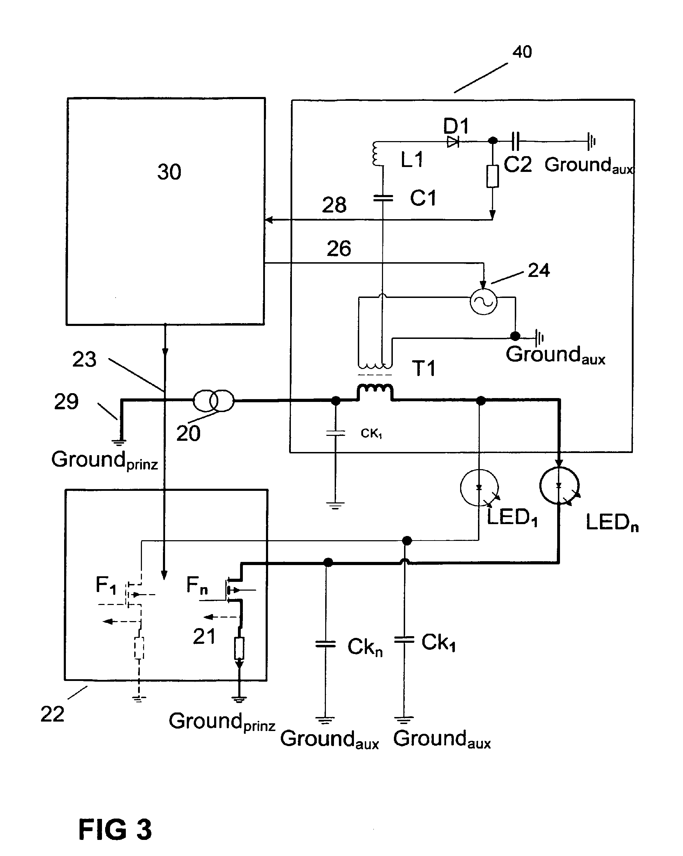

Figur 3 zeigt ein Ausführungsbeispiel der vorliegenden Erfindung für den normalen Betriebsfall: Ein sicherer Rechner 30 mit definiertem Abschaltverhalten nach SIL 0-4 aktiviert die Treiberkarte 22 für den normalen Betriebsfall. Diese Aktivierung erfolgt über eine Steuerleitung 23. Anstelle eines Rechners 30 kann auch eine speicherprogrammierbare Steuerung SPS 30 vorgesehen sein. Ob Rechner 30 oder SPS 30: Beide haben die Anforderung SIL 0-4 im Sinne der Normenfamilien IEC 61508 [1] und IEC61511 [2] zu erfüllen. Eine Hauptquelle 20 speist ein als LED ausgebildetes Signalleuchtmittel über den Signalstromkreis 29, in der FIG 3 fett dargestellt. Die beiden angegebenen Massen Gound_{prinz} sind elektrisch gesehen identisch. Gemäss der Figur 3 ist es beispielhaft die LEDₙ , die aktiviert ist. n steht dabei für einen Index n aus einer vorgegebenen Anzahl 1 .. N von mit aus der Quelle 20 zu versorgenden LED's. Dementsprechend sind auch die übrigen Teile indiziert:
Schalter F₁, .. Fₙ.
Mit der Stromauswertung 21 wird der tatsächliche Status der LEDₙ ausgewertet.

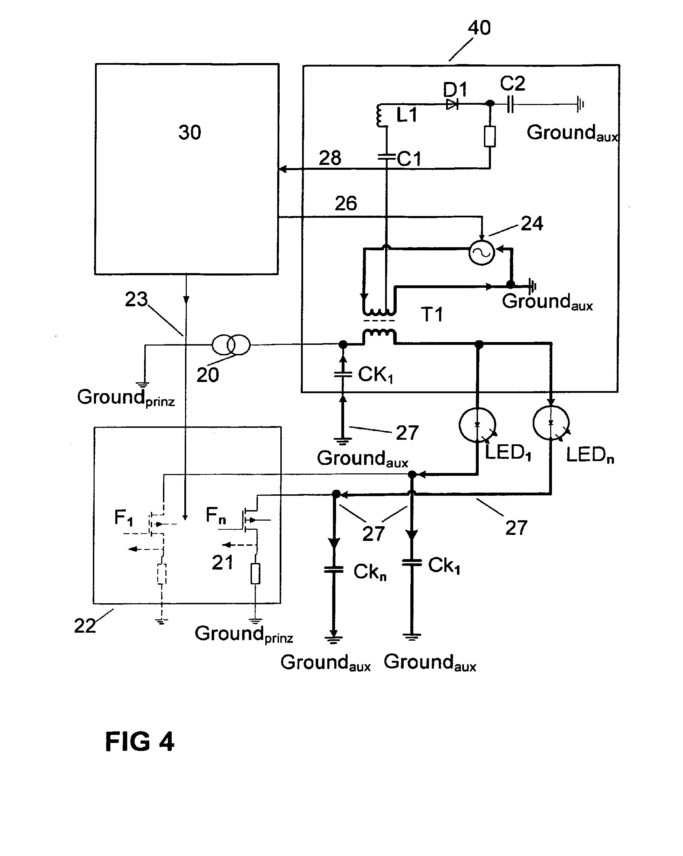

Figur 4 zeigt das Ausführungsbeispiel der vorliegenden Erfindung gemäss der Figur 3 für den Betrieb in der Rückfallebene: Aus irgendeinem Grund sei die Hauptquelle 20 (auch Betriebsfallspeise-Einheit 20 genannt) oder die Treiberkarte 22 nicht mehr in der Lage, eine LEDₙ mit Energie zu versorgen bzw. anzusteuern. Die SPS 30 oder der Rechner 30 aktivieren über eine Steuerleitung 26 eine Hilfsquelle 24 zur Aktivierung der Rückfallebene. Die Hilfsquelle 24 gibt eine AC-Spannung ab. Ein Strom fliesst über eine (Primär-)Spule eines Trafos T1. Die Sekundärspule dieses Trafos T1 speist nun über die Masse Groundₐᵤₓ alle Signalleuchtmittel LED₁ .. LEDₙ über den Signalstromkreis 27 mit Energie. Dieser Signalstromkreis 27 in der Rückfallebene ist in FIG 4 fett dargestellt. Ein Abgriff an der Primärwicklung des Trafos T1 erlaubt über die Kapazität Cl und die Induktivität L1 eine Auswertung 28 von Amplitude und Frequenz. Damit ist die sichere Rückmeldung eines Stromflusses im Stromkreis der Hilfsquelle 24 und der Primärspule des Trafos T1 unter Annahme einer definierten Last von Signalleuchtmitteln LED₁ .. LEDₙ sichergestellt. Auf diese Weise kann ein Fehlerfall von LED₁ .. LEDₙ festgestellt werden. Sollte ein Fehlerfall von allen LEDs bis auf eine einzige LEDₓ auftreten, führt dieser Fehler immer noch nicht dazu, dass fälschlicherweise keine Gefahr signalisiert wird. Die Hilfsquelle 24, der Trafo T1 und die Stromauswertung 28 bilden die sogenannte Rückfallebenenspeisung 40.

Für die Hilfsquelle 24 ist eine Frequenz im Bereich 1kHz bis 20kHz vorgesehen. Im Betrieb in der Rückfallebene - also bei Aktivierung der Hilfsquelle 24) fliesst der Strom im Sekundärkreis über Kondensatoren CK auf der Seite der Primärwicklung und CK₁, Ckₙ auf der Seite der Leuchtmittel LED₁ .. LEDₙ zur Masse Groundₐᵤₓ. Die in FIG 4 angegebenen vier Massen Groundₐᵤₓ sind elektrisch identisch. Diese Kondensatoren CK , CK₁, Ckₙ sind so dimensioniert, dass sie in dieser Betriebsart (Rückfallebene) eine tiefe Serie-Impedanz aufweisen.

Das vorstehende erläuterte Ausführungsbeispiel bezog sich auf als LED ausgebildete Signalleuchtmittel. Die Erfindung ist gleichermassen auch anwendbar für folgende Signalleuchtmittel (nicht abschliessende Aufzählung):
- Glühlampen,
- Blitzlampen,
- Drehleuchten.
Die betreffenden Signalleuchtmittel müssen nur die Eigenschaft aufweisen, mit Wechselstrom (AC) gespeist werden zu können.

### Liste der Bezugszeichen, Glossar

- 10₁, 10₂: Stromüberwachung
- 20: Betriebsfallspeise-Einheit; Hauptquelle; DC-Quelle, AC-Quelle; erste Energiequelle
- 21: Stromauswertung
- 22: Treiberkarte
- 23: Aktivierung Betriebsfallspeise-Einheit; Steuerleitung für Aktivierung Betriebsfallspeise-Einheit
- 24: Hilfsquelle, AC-Quelle, zweite Energiequelle
- 25: Hilfsquelle, Redundante Quelle, Batterie
- 26: Aktivierung Rückfallebene, Steuerleitung für Aktivierung Rückfallebene
- 27: Signalstromkreis in der Rückfallebene
- 28: Überprüfung Frequenz / Amplitude
- 29: Signalstromkreis in der Betriefsfallebene
- 30: SPS, sicherer Rechner mit definiertem Abschaltverhalten SIL 0-4;
- 40: Rückfallebenenspeisung
- Ck: Kopplungskondensator an einem Sekundärwicklungsabgriff des Transformators T1
- Ck₁, Ckₙ: den Signalleuchtmitteln LED₁, LEDₙ zugeordnete (Kopplungs-) Kondensatoren
- F₁, Fₙ: Schalter, Relais-Kontakt; MOS-FET
- Groundₐᵤₓ: Masse der Hilfsquelle
- Ground_{prinz}: Masse der Hauptquelle
- LED₁ , LED₂: Signalleuchtmittel,
- Qₐᵤₓ: Hilfsquelle, zweite Quelle, DC-, AC-Quelle
- Q_{prinz}: Hauptquelle, DC-, AC-Quelle
- S₀, S₁, Sₙ: Umschalter
- SIL: Sicherheits-Integritätslevel nach der Normenfamilie IEC 61511-x und IEC 61508-x
- SPS: Speicherprogrammierbare Steuerung
- T1: Übertrager; Transformator; Trafo

### Verzeichnis der zitierten Literatur

- [1]: IEC 61508 «Functional safety of electrical/electronic/ programmable electronic safety-related systems»
- [2]: IEC 61511 «Functional safety - Safety instrumeted systems for the process industry sector»
- [3]: US 3,684,891 «Fail-safe solid-state emergency lighting over supply and transfer circuit» Assignee: Dual-ite Company, Newtown, Conn
- [4]: US 4,564,767 «Uninterruptible siwtching power supply system» Assignee: TII Industiries, Inc., Copiague, N.Y.

## Patentansprüche

1. Energieversorgungseinheit enthaltend einen Signalleuchtmittelstromkreis (29) für ein Signalleuchtmittel (LED₁, LED_{N}), die des weiteren enthält:
- eine erste Energiequelle (20) und davon unabhängig eine zweite Energiequelle (24), die je mit einer eigenen Masse (Ground_{prinz} , Groundₐᵤₓ) verbunden sind, wobei die beiden Massen (Ground_{prinz}, Groundₐᵤₓ) voneinander elektrisch getrennt sind;
- Schalter (F₁, Fₙ) für die bedarfsweise Zuschaltung der ersten Energiequelle (20) eines Signalleuchtmittels (LED₁, LEDₙ), wobei mit dem Aussenden von Licht das Signalleuchtmittel (LED₁, LEDₙ) eine Gefahr signalisiert;
- bei Ausfall der ersten Energiequelle (20) die zweite Energiequelle (24) so ausgelegt ist, dass sie eine AC-Spannung abgibt und induktiv über einen Transformator (T1) an den Signalleuchtmittelstromkreis (27) der mit Energie zu versorgenden Signalleuchtmitteln (LED₁, LEDₙ) gekoppelt ist, um diese mit Energie zu versorgen;
**dadurch gekennzeichnet, dass**
bei einer Aktivierung der Signalleuchtmittel (LED₁, LEDₙ) mittels der zweiten Energiequelle (24) über den Transformator (T1) der Signalleuchtmittelstromkreis (27) über je einen Kondensator (CK; CK₁, CKₙ) mit der Masse (Groundₐᵤₓ) der zweiten Energiequelle (24) geführt ist.

2. Energieversorgungseinheit nach Anspruch 1,
**dadurch gekennzeichnet, dass**
die Schalter (F₁, Fₙ) für die bedarfsweise Zuschaltung eines Signalleuchtmittels (LED₁, LEDₙ) in einer Treiberkarte (22) angeordnet sind und dass für jedes Signalleuchtmittel (LED₁, LEDₙ) eine Stromauswertung (21) vorgesehen ist.

3. Energieversorgungseinheit nach Anspruch 2,
**dadurch gekennzeichnet, dass**
ein Rechner (30) oder eine speicherprogrammierbare Steuerung (30) vorgesehen ist, die die Schalter (F₁, Fₙ) der Treiberkarte (22) über eine Steuerleitung (23) aktiviert und dass alternativ beim Ausfall der ersten Energiequelle (20) über eine weitere Steuerleitung (26) die zweite Energiequelle (24) vom Rechner (30) bzw von der speicherprogrammierbaren Steuerung (30) aktivierbar ist.

4. Energieversorgungseinheit nach einem der Ansprüche 1 bis 3,
**dadurch gekennzeichnet, dass**
der Stromkreis über die zweite Energiequelle (24)einer Stromüberwachung (28) unterzogen ist.

5. Energieversorgungseinheit nach Anspruch 4,
**dadurch gekennzeichnet, dass**
für die Stromüberwachung (28) des Stromkreises über die zweite Energiequelle (24) ein Abgriff an der Primärwicklung des Transformators (T1) vorgesehen ist, so dass über einen Kondensator (C1) und eine Induktivität (L1) die Stromüberwachung (28) auch eine Auswertung von Amplitude und Frequenz des Stromkreises über die zweite Energiequelle (24) umfasst.

## Claims

1. Power supply unit containing a signal luminaire circuit (29) for a signal luminaire (LED₁, LED_{N}), which also contains:
- A first energy source (20) and dependent thereon a second energy source (24), which are connected to a separate ground (Ground_{prinz} , Groundₐᵤₓ), wherein the two grounds (Ground_{prinz}, Groundₐᵤₓ) are electrically isolated from one another;
- Switches (F₁, Fₙ) for the on-demand connection of the first energy source (20) of a signal luminaire (LED₁, LEDₙ), wherein the signal luminaire (LED₁, LEDₙ) signals a danger by emitting light;
- On failure of the first energy source (20) the second energy source (24) is designed so that it emits an AC voltage and is coupled inductively via a transformer (T1) to the signal luminaire circuit (27) which is coupled to signal luminaires (LED₁, LEDₙ) to be supplied with energy, in order to supply these with energy;
**characterised in that**,
for an activation of the signal luminaire (LED₁, LEDₙ) by means of the second energy source (24) via the transformer (T1), the signal luminaire circuit (27) is routed via a capacitor (CK; CK₁, CKₙ) in each case to the ground (Groundₐᵤₓ) of the second energy source (24).

2. Power supply unit according to claim 1,
**characterised in that**
the switches (F₁, Fₙ) for the on-demand connection of a signal luminaire (LED₁, LEDₙ) are disposed in a driver card (22) and a power analyzer (21) is provided for each signal luminaire (LED₁, LEDₙ).

3. Power supply unit according to claim 2,
**characterised in that**
a processor (30) or a programmable logic control (30) is provided, which activates the switches (F₁, Fₙ) of the driver card (22) via a control line (23) and alternatively, on failure of the first energy source (20), the second energy source (24) is able to be activated via a further control line (26) by the processor (30) or by the programmable logic control (30).

4. Power supply unit according to one of claims 1 to 3,
**characterised in that**
the circuit is subjected to power monitoring (28) via the second energy source (24).

5. Power supply unit according to claim 4,
**characterised in that,**
for the power monitoring (28) of the circuit via the second energy source (24) a tap is provided on the primary winding of the transformer (T1) so that, via a capacitor (C1) and an inductor (L1), the power monitoring (28) also includes an evaluation of amplitude and frequency of the circuit via the second energy source (24).

## Revendications

1. Unité d'alimentation en énergie comprenant un circuit de moyens lumineux de signal (29) pour un moyen lumineux de signal (LED₁, LED_{N}), qui comprend en outre :
- une première source d'énergie (20) et une deuxième source d'énergie (24) qui dépend de celle-ci, qui sont chacune raccordées à une masse qui leur est propre (Groundp_{rinz}, Groundₐᵤₓ), les deux masses (Ground_{prinz}, Groundₐᵤₓ) étant séparées électriquement l'une de l'autre ;
- des commutateurs (F₁, F_{N}) pour mettre sous tension en cas de besoin la première source d'énergie (20) d'un moyen lumineux de signal (LED₁, LED_{N}), le moyen lumineux de signal signalant un danger en émettant de la lumière ;
- lors de la coupure de la première source d'énergie (20) la deuxième source d'énergie (24) est conçue de sorte qu'elle émet une tension alternative et qu'elle est couplée de manière inductive par le biais d'un transformateur (T1) au circuit de moyens lumineux de signal (27) des moyens lumineux de signal (LED₁, LED_{N}) à alimenter en énergie, afin de les alimenter en énergie ;
**caractérisée en ce que**
lors d'une activation des moyens lumineux de signal (LED₁, LED_{N}) au moyen de la deuxième source d'énergie (24) par le biais du transformateur (T1) le circuit de moyens lumineux de signal (27) est mis sous tension à chaque fois par le biais d'un condensateur (CK ; CK₁, CKₙ) avec la masse (Groundₐᵤₓ) de la deuxième source d'énergie (24).

2. Unité d'alimentation en énergie selon la revendication 1, **caractérisée en ce que**
les commutateurs (F₁, F_{N}) sont disposés pour mettre sous tension en cas de besoin un moyen lumineux de signal (LED₁, LED_{N}) dans une carte de commande (22) et **en ce que** pour chaque moyen lumineux de signal (LED₁, LED_{N}) une évaluation du courant est prévue.

3. Unité d'alimentation en énergie selon la revendication 2,
**caractérisée en ce qu'**
un ordinateur (30) ou une commande à mémoire programmée (30) est prévu, qui active les commutateurs (F₁, F_{N}) de la carte de commande (22) par le biais d'une ligne de commande (23) et **en ce qu'**en variante lors de la coupure de la première source d'énergie (20) par le biais d'une autre ligne de commande (26) la deuxième source d'énergie (24) peut être activée par l'ordinateur (30) ou la commande à mémoire programmée (30).

4. Unité d'alimentation en énergie selon l'une des revendications 1 à 3,
**caractérisée en ce que**
le circuit est soumis à une surveillance de courant (28) par le biais de la deuxième source d'énergie (24).

5. Unité d'alimentation selon la revendication 4,
**caractérisée en ce que**
pour la surveillance de courant (28) du circuit par le biais de la deuxième source d'énergie (24) une prise est prévue au niveau de l'enroulement primaire du transformateur (T1), de sorte que par le biais du condensateur (C1) et d'une inductance (L1) la surveillance de courant (28) comprend également une évaluation de l'amplitude et de la fréquence du circuit par le biais de la deuxième source d'énergie (24).
